# EUROPEAN PATENT APPLICATION

(11) **EP 1 585 133 A1**
(43) Date of publication of application: **12.10.2005**
(21) Application number: 05252134.1
(22) Date of filing: 05.04.2005
(51) Int. Cl.: G11B 27/028, G11B 27/10, G11B 27/34, G11B 27/32

(54) **Editing apparatus, editing method, program, and recording medium**

(30) Priority: 09.04.2004 JP 2004115603
(71) Applicant: SONY CORPORATION, Tokyo (JP)
(72) Inventor: Tsuchiya, Kazuhisa, Sony Corporation, Tokyo (JP); Tsukimori, Koji, Sony Corporation, Tokyo (JP); Ohwada, Shigeru, Sony Corporation, Tokyo (JP)
(74) Representative: Robinson, Nigel Alexander Julian

(57) **Abstract**

The present invention provides an editing apparatus including: acquisition means for acquiring identification information for identifying a camera that has shot a picture selected out of pictures shot by a plurality of cameras; generation means for generating meta data, which indicates the switching timing for switching among a plurality of pictures shot by the plurality of cameras, in accordance with the identification information acquired by the acquisition means; and editing means for editing pictures, which have been shot by the plurality of cameras, by using the meta data generated by the generation means.

## Description

The present invention relates to an editing apparatus, editing method, program, and recording medium, and more particularly to an editing apparatus, editing method, program, and recording medium that are suitable for editing pictures shot by a plurality of relay cameras.

A related-art video editing apparatus for editing pictures shot by a relay camera controls a plurality of reproduction VTRs (Video Tape Recorders) into which prerecorded video tapes are loaded, and causes a recording VTR to record edited pictures that are generated by reproducing the plurality of reproduction VTRs and switching among a plurality of reproduced pictures with a video switcher or by superposing reproduced pictures (refer, for instance, to Japanese Patent Laid-open No. 2000-149410).

The video switcher is used not only for editing purposes but also for switching among input pictures fed from a plurality of relay cameras or superposing such input images when concerts and sport events are to live broadcast or recorded. Pictures output from the video switcher are live broadcast directly or recorded onto a video tape.

To facilitate subsequent editing operations, a video switcher operator or editing personnel generally prepares a memo to indicate what scenes are used by switching among relay cameras or searches videotaped switchable output pictures to locate selected scenes.

When, for instance, an operator performs editing with a video editing apparatus described above, it is necessary, for instance, immediately after the end of a live broadcast, to collect video tapes onto which pictures are recorded by a plurality of relay cameras, monitor recorded pictures that are reproduced by a plurality of reproduction VTRs, examine memos and video tapes, on which selected output pictures are recorded, to locate selected scenes, and perform a cue to an editing point for joining highlight scenes recorded on video tapes. It takes a considerable amount of time and energy for the operator to complete the above editing steps.

The present invention has been made in view of the above circumstances and makes it possible to perform a cue to an editing point with greater ease. The present invention also makes it easier to perform editing at a point near the editing point because it is easier to perform a cue to the editing point. Further, the present invention makes it possible to complete a process for performing a cue to the editing point with greater ease without requiring the user to perform a complicated procedure.

According to one aspect of the present invention, there is provided an editing apparatus comprising acquisition means for acquiring identification information for identifying a camera that has shot a picture selected out of pictures shot by a plurality of cameras; generation means for generating meta data, which indicates the switching timing for switching among a plurality of pictures shot by the plurality of cameras, in accordance with the identification information acquired by the acquisition means; and editing means for editing pictures, which have been shot by the plurality of cameras, by using the meta data generated by the generation means.

The plurality of cameras are, for instance, the relay cameras for shooting pictures for a television broadcast. Pictures fed from the relay cameras are supplied, for instance, to a machine called a switcher. The switcher selectively extracts one picture from a plurality of pictures. The switcher also outputs information that identifies a camera.

The editing means may ensure that the meta data is reflected automatically or manually.

The editing means may reflect the meta data in a program created by entering a plurality of pictures, which have been shot by the plurality of cameras, with switching timing, and handle the switching timing as an editing point of the program.

The editing means may record the editing point in the program as a marker.

The editing means may create a timeline sequence from the program and handle an editing point of the program as a cut editing point within the timeline sequence.

The editing means may create a timeline sequence from a plurality of pictures shot by the plurality of cameras and perform editing by rearranging a plurality of pictures shot by the plurality of cameras within the timeline sequence.

According to another aspect of the present invention, there is provided an editing method for use in an editing apparatus, which edits a plurality of pictures, the editing method comprising an acquisition step of acquiring identification information for identifying a camera that has shot a picture selected out of pictures shot by a plurality of cameras; a generation step of generating meta data, which indicates the switching timing for switching among a plurality of pictures shot by the plurality of cameras, in accordance with the identification information acquired in the acquisition step; and an editing step of editing pictures, which have been shot by the plurality of cameras, by using the meta data generated in the generation step.

According to further another aspect of the present invention, there is provided a program for causing an editing apparatus, which edits a plurality of pictures, to perform a process including an acquisition step of acquiring identification information for identifying a camera that has shot a picture selected out of pictures shot by a plurality of cameras; a generation step of generating meta data, which indicates the switching timing for switching among a plurality of pictures shot by the plurality of cameras, in accordance with the identification information acquired in the acquisition step; and an editing step of editing pictures, which have been shot by the plurality of cameras, by using the meta data generated in the generation step.

According to still another aspect of the present invention, there is provided a recording medium storing a computer-readable program for editing a plurality of pictures and performing a process including an acquisition step of acquiring identification information for identifying a camera that has shot a picture selected out of pictures shot by a plurality of cameras; a generation step of generating meta data, which indicates the switching timing for switching among a plurality of pictures shot by the plurality of cameras, in accordance with the identification information acquired in the acquisition step; and an editing step of editing pictures, which have been shot by the plurality of cameras, by using the meta data generated in the generation step.

According to still another aspect of the present invention, there is provided an editing apparatus including: acquisition means for acquiring meta data, which indicates the switching timing for switching among a plurality of pictures shot by a plurality of cameras, in accordance with identification information for identifying a camera that has shot a picture selected out of pictures shot by the plurality of cameras; and editing means for editing pictures, which have been shot by the plurality of cameras, by using the meta data.

When a plurality of pictures are to be edited to obtain a single picture with the editing apparatus, editing method, and recording medium according to an embodiment of the present invention, the information indicating the timing for switching to a picture selected as an edited picture is generated. Further, detailed editing is performed in accordance with the generated information.

The present invention makes it possible to readily record an editing point at which pictures shot by different cameras are switched, without requiring the user to perform a complicated procedure.

The present invention makes it possible to perform editing with ease by using a recorded editing point.

Embodiments of the invention will now be described, by way of example only, with reference to the accompanying drawings in which:
FIG. 1 illustrates the configuration of one embodiment of a system according to one example embodiment of the present invention;
FIG. 2 illustrates a typical configuration of a switcher;
FIG. 3 illustrates a typical configuration of an interface section;
FIG. 4 illustrates a typical configuration of an editing section;
FIG. 5 illustrates the functions of the editing section;
FIG. 6 is a flowchart illustrating a switcher process;
FIGS. 7A through 7E illustrate switching information;
FIG. 8 illustrates a meta data generation process;
FIG. 9 illustrates the structure of meta data;
FIGS. 10A through 10C illustrate switching information;
FIG. 11 illustrates the structure of meta data;
FIGS. 12A and 12B illustrate marks;
FIG. 13 is a flowchart illustrating a marking process;
FIGS. 14A through 14D illustrate an editing operation;
FIG. 15 illustrates an editing operation;
FIG. 16 illustrates a sequence generation operation;
FIG. 17 is a flowchart illustrating a sequence generation operation;
FIG. 18 illustrates marks; and
FIG. 19 illustrates another typical configuration of a switcher.

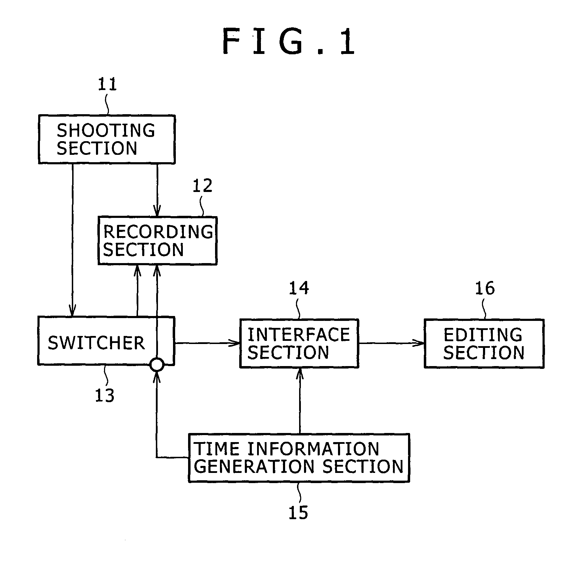

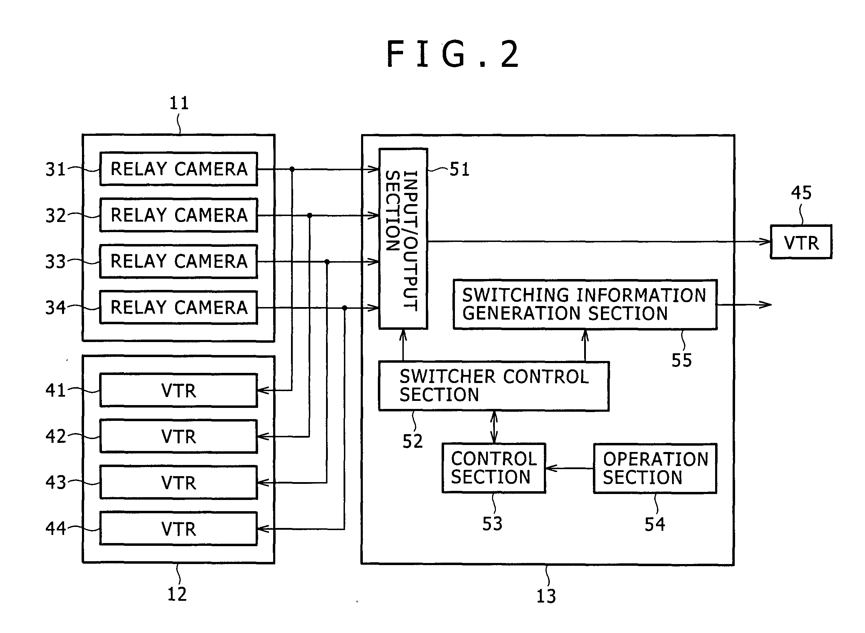

FIG. 1 illustrates the configuration of one example embodiment of a system according to the present invention. The system shown in FIG. 1 is used for editing pictures that are shot by a plurality of cameras. The details of the configuration of each section will be described with reference to FIGS. 2 to 5. The data exchanged by various sections will also be described with reference to FIGS. 2 to 5.

A shooting section 11 includes a plurality of cameras. It is assumed in consideration of a television broadcast that broadcast cameras constitute the shooting section 11. Pictures shot by the shooting section 11 are supplied to a recording section 12. The recording section 12 includes a plurality of VTRs (Video Tape Recorders). The number of the VTRs corresponds to number of the cameras constituting the shooting section 11.

The pictures shot by the shooting section 11 are also supplied to a switcher 13. The switcher 13 selects a picture from pictures shot by a plurality of cameras, which are supplied from the shooting section 11, and outputs the selected picture as a broadcast picture. In a live broadcast, for instance, a single picture that is output as a result of picture switching may be delivered via a broadcast wave. No matter whether the employed broadcast type is a live broadcast, the single picture that is output as a result of picture switching is edited as needed by an editing section 16.

The single picture that is output as a result of picture switching is supplied from the switcher 13 to the recording section 12 and recorded. The switcher 13 also supplies information, which indicates the switching timing, to an interface section 14. The interface section 14 also receives time information that is generated by a time information generation section 15.

The information entering the interface section 14 is supplied to the editing section 16. Although the figure indicates that the interface section 14 is separate from the editing section 16 and other sections, it may be included in the switcher 13 or the editing section 16.

Pictures shot by a plurality of cameras that constitute the shooting section 11 are supplied to the editing section 16. The editing section 16 creates a picture by editing the supplied pictures as needed. The pictures supplied from the shooting section 11 are recorded by a plurality of VTRs that constitute the recording section 12. Video tapes recording such pictures are physically delivered to the editing section 16. The delivered video tapes are reproduced by VTRs provided for the editing section 16. In this manner, the pictures obtained by the shooting section 11 are supplied to the editing section 16.

Alternatively, a wired connection or wireless connection may be established between the shooting section 11 (or recording section 12) and editing section 16 to permit them to exchange data directly. Through such a connection, the pictures obtained by the shooting section 11 may be supplied to the editing section 16. The switcher 13 and editing section 16 (including the interface section 14) may be constructed as one piece. [Shooting section, recording section, and switcher configurations]

The configurations of the shooting section 11, recording section 12, and switcher 13 will now be described with reference to FIG. 2. The shooting section 11 includes relay cameras 31 through 34. For explanation purposes, it is assumed that four relay cameras constitute the shooting section 11. Since the shooting section 11 includes the four relay cameras 31 through 34, the recording section 12, which records pictures fed from the relay cameras, includes four VTRs 41 through 44.

The recording section 12 also includes a VTR 45 for recording a picture that is output from the switcher 13.

Pictures shot by the relay cameras 31 through 34, which constitute the shooting section 11, are supplied not only to the VTRs 41 through 44, which belong to the recording section 12, but also to an input/output section 51 of the switcher 13. The input/output section 51 has a function for selecting one picture from a plurality of input pictures by switching pictures and outputting only the selected picture to the outside. Such a switching operation is performed upon instructions from a switcher control section 52.

A control section 53, which controls various components of the switcher 13, issues instructions to the switcher control section 52. Upon instructions from an operation section 54, the control section 53 controls the components. The operation section 54 gives information to the switcher 13 in order to indicate which relay camera is selected by the user for picture selection purposes.

When a switching instruction is issued by the switcher control section 52, it is supplied to a switching information generation section 55 as well. The switching information generation section 55 outputs information to the interface section 14 (FIG. 1) to indicate a relay camera from which a picture is output to a VTR 45 (this information is hereinafter referred to as the switching information).

A picture output from the input/output section 51 is broadcast via a broadcast wave as needed (e.g., for a live broadcast) although it is now shown in FIG. 2. The information generated by the time information generation section 15 (FIG. 1) is also supplied to the recording section 12 (including a VTR 45) and switcher 13.

### [Interface section configuration]

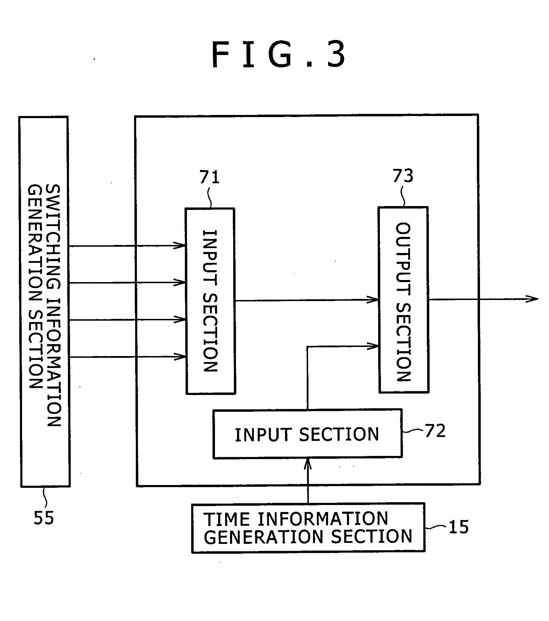

FIG. 3 shows a typical internal configuration of the interface section 14. The switching information generated by the switching information generation section 55 enters an input section 71 of the interface section 14. The switching information will be described later in detail. However, the switching information indicates whether a picture fed from the relay camera 31, 32, 33, or 34 is output as a result of switching (supplied to the VTR 45). The switching information is generated for each of the relay cameras 31 through 34. Therefore, four sets of switching information about the relay cameras 31 through 34 enter the input section 71.

On-Air Tally and other similar information may be used as the switching information.

The time information generated by the time information generation section 15 enters an input section 72 of the interface section 14. The time information is acceptable when it represents a date and time of picture shooting or the elapsed time from the beginning of a shooting operation (which is regarded as 0). Further, LTC (Longitudinal Time Code) and other similar information may also be used as the time information.

The information entering input sections 71 and 72 is output to the editing section 16 or other external device via an output section 73.

### [Editing section configuration]

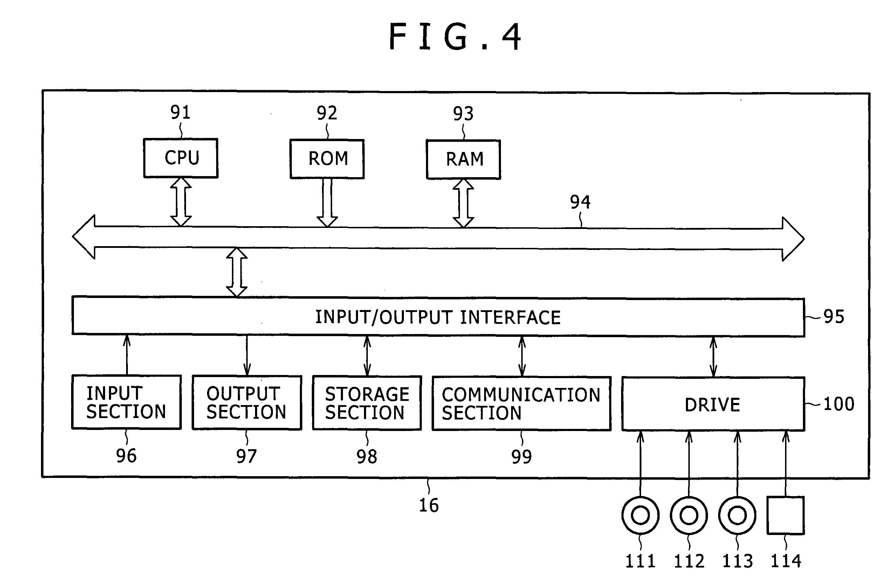

For example, a personal computer may be used as the editing section 16. FIG. 4 shows a typical internal configuration of a personal computer that is used as the editing section 16.

A CPU (Central Processing Unit) 91 in the editing section 16 performs various processes in compliance with a program that is stored in a ROM (Read Only Memory) 92. A RAM (Random Access Memory) 93 stores, for instance, data and program that are required when the CPU 91 performs various processes. An input/output interface 95 is connected to an input section 96, which includes a keyboard and a mouse. A signal entering the input section 96 is output to the CPU 91 via the input/output interface 95. The input/output interface 95 is also connected to an output section 97, which includes a display and a speaker.

Further, the input/output interface 95 is connected to a storage section 98, which includes a hard disk, and to a communication section 99, which exchanges data with another apparatus via the Internet or other network. A drive 100 is used when data is to be read from or written onto a magnetic disk 111, optical disk 112, magneto-optical disk 113, semiconductor memory 114, or other recording medium.

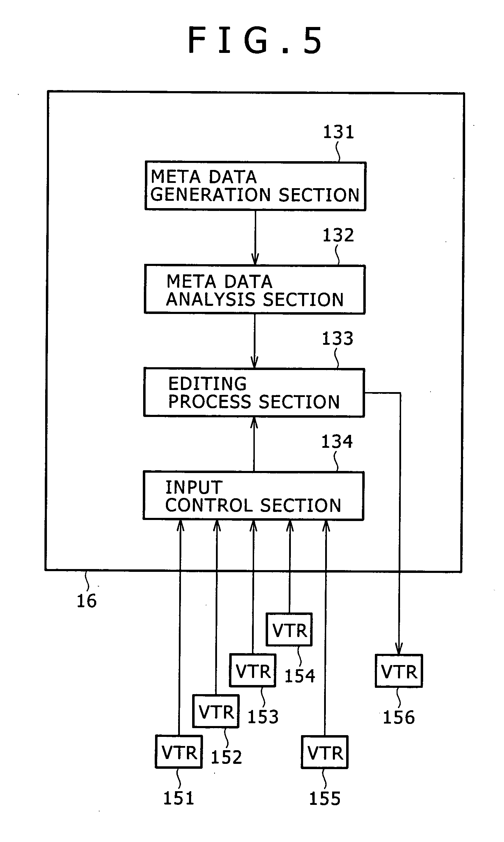

FIG. 5 is a block diagram illustrating the functions that are exercised by the editing section 16, which is configured as shown in FIG. 4. A meta data generation section 131 generates meta data by using switching information and time information supplied from the interface section 14. The meta data will be described later in detail. However, the meta data indicates an editing point and can be used during editing.

A meta data analysis section 132 analyzes as needed the meta data generated by the meta data generation section 131. The result of such an analysis is supplied to an editing process section 133. The editing process section 133 edits supplied pictures upon instructions from the user (e.g., adds or cuts a specific scene). Pictures are supplied to the editing process section 133 when their input is controlled by an input control section 134.

The input control section 134 is configured so that a user-specified picture, which is selected from pictures fed by a plurality of VTRs, is supplied to the editing process section 133. The input control section 134 is connected to VTRs 151, 152, 153, 154, and 155. The VTR 151 supplies a picture that is shot by the relay camera 31 and recorded by the VTR 41. The VTR 152 supplies a picture that is shot by the relay camera 32 and recorded by the VTR 42. The VTR 153 supplies a picture that is shot by the relay camera 33 and recorded by the VTR 43. The VTR 154 supplies a picture that is shot by the relay camera 34 and recorded by the VTR 44. The VTR 155 supplies a picture that is output from the switcher 13 and recorded by the VTR 45.

The input control section 134 selects one picture from pictures supplied from the VTRs 151 through 155 and supplies the selected picture to the editing process section 133. The picture edited by the editing process section 133 is output to a VTR 156 and recorded.

### [Switcher process]

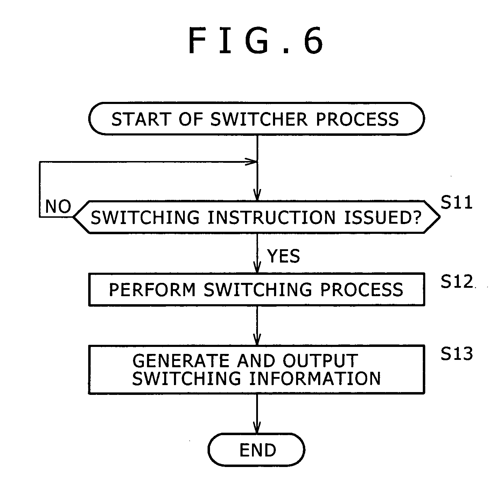

The process performed by the switcher 13, which is shown in FIG. 2, will now be described with reference to a flowchart in FIG. 6. For explanation purposes, it is assumed that pictures already shot by the relay cameras 31 through 34, which constitute the shooting section 11.

In step S11, the control section 53 judges whether a switching instruction is issued. The switcher operator (user) views a monitor (not shown) to confirm pictures that are shot by the relay cameras 31 through 34. In such a state, the user selects a relay camera that shoots the picture to be broadcast (switches to the picture to be broadcast).

The above selection (switching operation) is reported to the control section 53 when the operation section 54 is operated. In step S11, the control section 53 judges whether the switching operation is reported. When the control section 53 judges that the switching operation is reported, the flow proceeds to step S12. In step S12, a process is performed to switch to a relay camera that is designated as a switching destination.

The control section 53 outputs information to the switcher control section 52 for the purpose of identifying the relay camera that is designated as the switching destination. Upon receipt of the information, the switcher control section 52 controls the input/output section 51 so as to output a picture that is shot by the relay camera designated as the switching destination.

The input/output section 51 includes switches for physically connecting a plurality of input terminals (not shown), which input pictures from the relay cameras 31 through 34, and an external output terminal (not shown) to which the VTR 45 is connected. The input/output section 51 is configured so that only the picture fed from one relay camera is output when one of the switches closes. When the input/output section 51 includes the switches as described above, an instruction for closing a particular switch is issued.

When an instruction is issued by the switcher control section 52, it is supplied to the switching information generation section 55 as well. In step S13, the switching information generation section 55 generates switching information and supplies the generated information to the interface section 14 (FIG. 3).

The picture and switching information, which are generated when the switcher 13 performs the above process, will now be described.

### [Picture and switching information]

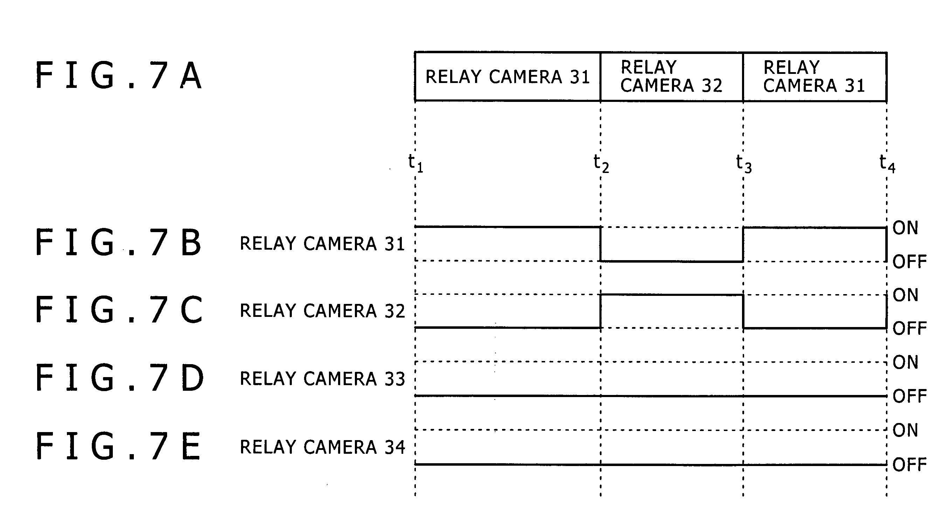

FIGS. 7A through 7E illustrate pictures that are output from the switcher 13 (and supplied to the VTR 45) and switching information that is output from the switching information generation section 55 (and supplied to the interface section 14).

FIG. 7A indicates pictures that are supplied to the VTR 45. During the time interval between time t₁ and time t₂, the picture shot by the relay camera 31 is output. During the time interval between time t₂ and time t₃, the picture shot by the relay camera 32 is output. During the time interval between time t₃ and time t₄, the picture shot by the relay camera 31 is output again. The pictures output as described above are recorded by the VTR 45.

FIGS. 7B through 7E indicate switching information that is generated and output by the switching information generation section 55. As shown in FIGS. 7B through 7E, the switching information indicates whether the individual pictures shot by the relay cameras 31 through 34 are output (selected).

In FIGS. 7B through 7E, "ON" means that the associated relay camera is selected (its picture is output to the VTR 45), whereas "OFF" means that the associated relay camera is not selected (its picture is not output to the VTR 45).

Referring to FIG. 7B, the switching information about the relay camera 31 indicates that the "ON" state prevails between time t₁ and time t₂, and that the "OFF" state prevails between time t₂ and time t₃, and further that the "ON" state prevails between time t₃ and time t₄.

Referring to FIG. 7C, the switching information about the relay camera 32 indicates that the "OFF" state prevails between time t₁ and time t₂, and that the "ON" state prevails between time t₂ and time t₃, and further that the "OFF" state prevails between time t₃ and time t₄.

Referring to FIG. 7D, the switching information about the relay camera 33 indicates that the "OFF" state prevails between time t₁ and time t₄. Referring to FIG. 7E, the switching information about the relay camera 34 indicates that the "OFF" state prevails between time t₁ and time t₄.

When the pictures shown in FIG. 7A are output, the switching information shown in FIGS. 7B through 7E is output.

The switching information is supplied to the editing section 16 via the interface section 14. The time information generated by the time information generation section 15 is also supplied to the editing section 16 via the interface section 14. The time information generated by the time information generation section 15 is used, for instance, to identify the time (time t₁ or time t₂) at which switching is performed as indicated in FIGS. 7A through 7E.

### [Meta data generation]

The process performed by the editing section 16, to which the switching information and time information are supplied, will now be described. First of all, the meta data, which is generated by the meta data generation section 131 (FIG. 5) of the editing section 16, will be described.

In step S31, the meta data generation section 131 acquires switching information and time information. This acquisition is accomplished when the interface section 14 directly supplies the information to the meta data generation section 131. Direct information supply is achieved when, for instance, the interface section 14 and editing section 16 exchange information through a predetermined cable that is connected between the interface section 14 and editing section 16 or exchange information wirelessly.

An alternative is to connect a personal computer (not shown) to the interface section 14, allow the personal computer to record the switching information and time information, which are supplied from the interface section 14, onto a predetermined recording medium (e.g., flexible disk), and set the recording medium in the editing section 16 to let the editing section 16 read the recorded information from the recording medium.

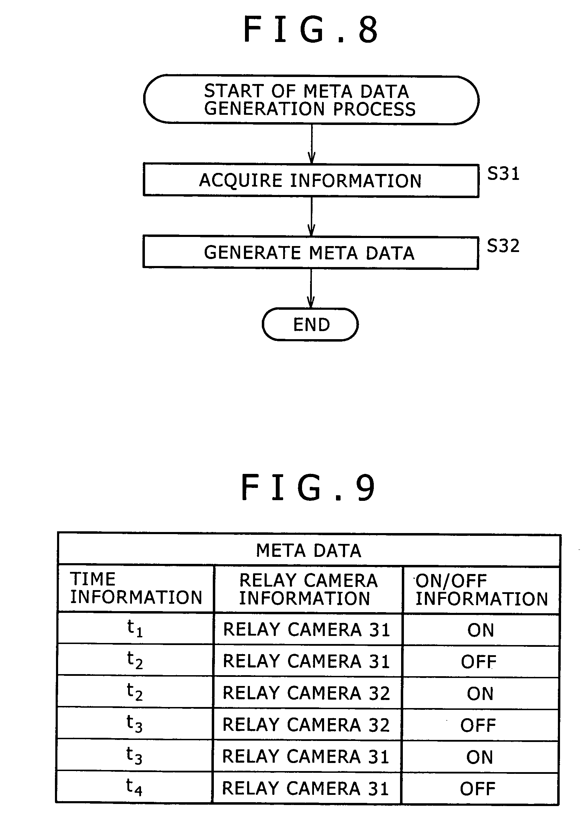

When the switching information and time information are acquired in step S31, step S32 is performed to generate meta data from the acquired information. FIG. 9 shows an example of generated meta data.

The time information, relay camera information, ON/OFF information, and the relationship among these items of information are written as the meta data. The meta data shown in FIG. 9 is created when the situation is as indicated in FIGS. 7A through 7E. Referring to the row in which "time t₁" is written as the time information, the relay camera information associated with time t₁ is "relay camera 31," and the information associated as the ON/OFF information is "ON."

Referring to the row in which "time t₂" is written as the time information, the relay camera information associated with time t₂ is "relay camera 31," and the information associated as the ON/OFF information is "OFF." Further, the time information about "time t₂" is also associated with "relay camera 32" as the relay camera information and with "ON" as the ON/OFF information.

FIGS. 7A through 7E indicate that switching is performed from the picture of the relay camera 31 to the picture of the relay camera 32 at time t₂. In other words, at time t₂, the relay camera 31 switches from the "ON" state to the "OFF" state and the relay camera 32 switches from the "OFF" state to the "ON" state.

As described above, the information about a relay camera, which is switched from the "ON" state to the "OFF" state or from the "OFF" state to the "ON" state, is written as the meta data. That is to say, the information about a camera that has shot a selected picture and the time are written as the meta data.

The time information, which is included in the meta data, is generated with the time information generated by the time information generation section 15 (FIG. 1). The relay camera information and ON/OFF information, which are also included in the meta data, are generated with the switching information generated by the switching information generation section 55.

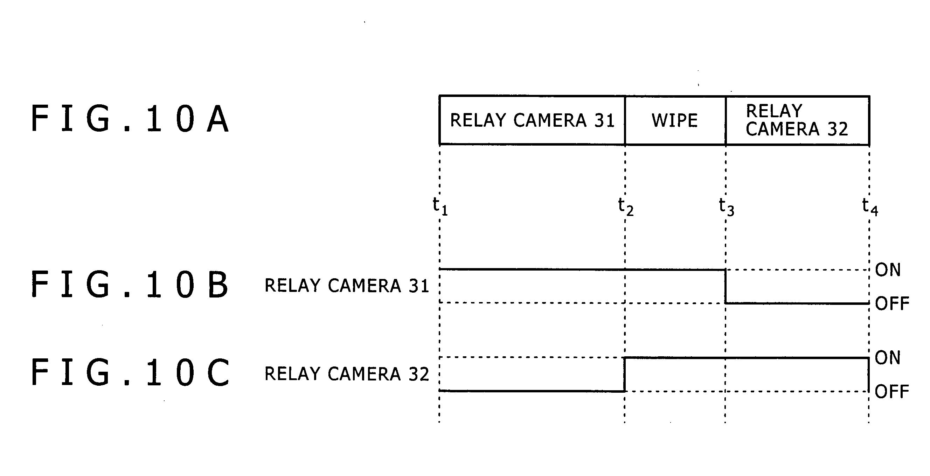

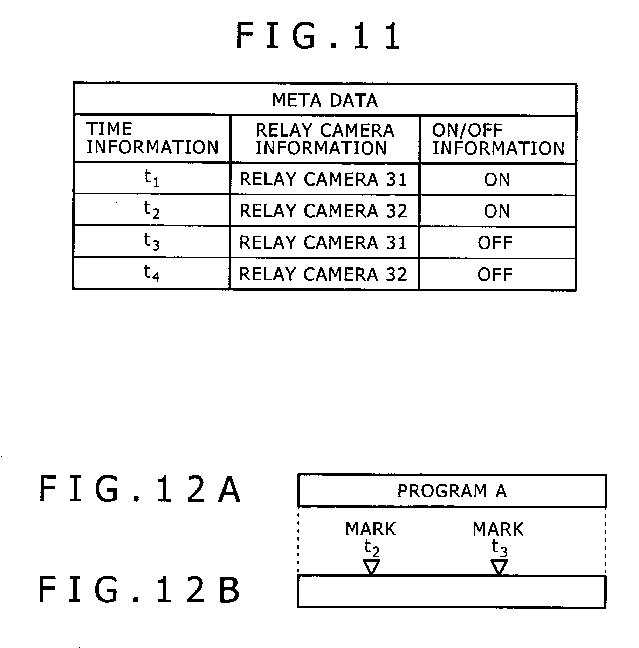

The meta data shown in FIG. 9 is generated when the situation is as indicated in FIGS. 7A through 7E. Another example of meta data will now be described. FIG. 11 shows meta data that is generated when the situation shown in FIGS. 10A through 10C prevails.

First of all, the situation shown in FIGS. 10A through 10C will be described. FIG. 10A shows a picture that is supplied to the VTR 45, as is the case with FIG. 7A. Similarly, FIGS. 10B and 10C show switching information that is generated and output from the switching information generation section 55, as is the case with FIGS. 7B and 7C. However, FIGS. 10A through 10C merely show the switching information about the relay cameras 31 and 32.

Referring to FIG. 10A, the picture shot by the relay camera 31 is output between time t₁ and time t₂; a special picture called "wipe" is output between time t₂ and time t₃; the picture shot by the relay camera 32 is output between time t₃ and time t₄; and the pictures output as described above are recorded by the VTR 45.

The special picture called "wipe" will now be explained. The term "wipe" denotes a transition of scenes in a visual production where one image appears to wipe the previous one from the screen. Commonly used "wipe" techniques include "standard wipe," "enhanced wipe," "rotary wipe," "mosaic wipe," "random wipe," and "diamond dust wipe." Although the subsequent description is given with reference to "wipe," it should be noted that "mix" is also used as a special picture, which denotes a transition of scenes in a visual production where one image mixes with the preceding one and then replaces the previous one.

Referring to FIG. 10B, the switching information indicates that relay camera 31 is in the "ON" state between time t₁ and time t₃ (until the end of a wipe) and in the "OFF" state after time t₃ in a situation where the above special picture is sandwiched between two other pictures. Referring to FIG. 10C, the switching information indicates that the relay camera 32 is in the "OFF" state between time t₁ and time t₂ (until the start of a wipe) and in the "ON" state after time t₂.

As described above, the meta data generated when a special picture called "wipe" is sandwiched between two other pictures is as indicated in FIG. 11. Referring to the row in which "time t₁" is written as the time information, the relay camera information associated with time t₁ is "relay camera 31," and the information associated as the ON/OFF information is "ON." Referring to the row in which "time t₂" is written as the time information, the relay camera information associated with time t₂ is "relay camera 32," and the information associated as the ON/OFF information is "ON."

Referring to the row in which "time t₃" is written as the time information, the relay camera information associated with time t₃ is "relay camera 31," and the information associated as the ON/OFF information is "OFF." Referring to the row in which "time t₄" is written as the time information, the relay camera information associated with time t₄ is "relay camera 32," and the information associated as the ON/OFF information is "OFF."

When the meta data described above is referenced, it is possible to determine that a special picture (a "wipe" picture in this case) is sandwiched between two other pictures while a state shown in FIGS. 10A through 10C prevails, that is, when the relay cameras 31 and 32 are both in the "ON" state between time t₂ and time t₃.

The meta data shown in FIG. 9 or 11 is to be considered as illustrative and not restrictive. More specifically, information not shown may be written as the meta data. The meta data is written, for instance, in XML (extensible Markup Language).

### [Editing with meta data]

The editing process performed by the editing section 16 (FIG. 5) will now be described. When the meta data generation section 131 performs a process that is described above, the editing section 16 generates meta data. The generated meta data is analyzed by the meta data analysis section 132. The editing process section 133 then performs editing by using the analysis result.

First of all, an editing operation for marking an editing point (switching point) on a picture recorded by the VTR 45 (picture selected as a result of switching) will be described. The picture recorded by the VTR 45 (hereinafter referred to as program A) is not provided with information for indicating what relay camera was used for shooting or when picture switching was performed, as indicated in FIG. 12A.

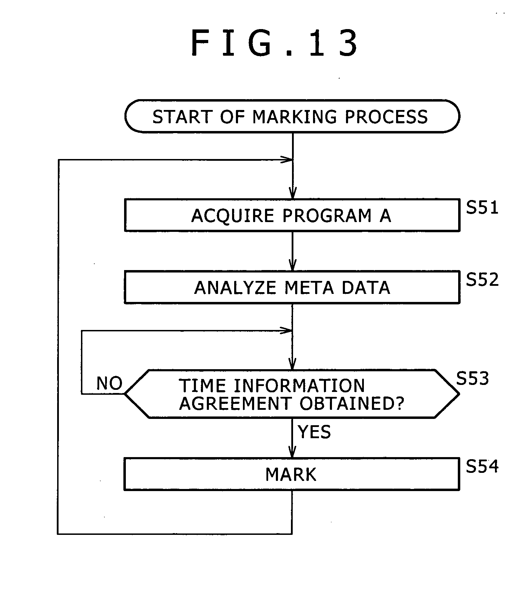

When program A is to be marked with switching information, which indicates the time at which relay camera switching was performed, as indicated in FIG. 12B, the process illustrated by a flowchart in FIG. 13 is performed. First of all, step S51 is performed to acquire program A.

Program A is recorded by the VTR 45 (FIG. 2) and reproduced, for instance, by the VTR 155 (FIG. 5), which is connected to the editing section 16. The editing process section 133 controls the input control section 134 to acquire a picture (that is, program A) that is fed from the VTR 45.

In step S52, the meta data analysis section 132 analyzes the meta data. The meta data is generated by the meta data generation section 131. Meta data generated in real time may be used. An alternative is to generate meta data before analysis, record the generated meta data on a predetermined recording medium, and use the recorded meta data. The result of the analysis made by the meta data analysis section 132 is supplied to the editing process section 133.

In step S53, the editing process section 133 judges whether time information agreement is obtained. For judgment purposes, the time information written as the meta data is compared against the time information recorded in program A. The time information supplied from the time information generation section 15 (FIG. 1) is recorded in program A. Time information agreement indicates the timing with which relay camera switching is performed.

When the editing process section 133 judges in step S53 that the time information written as the meta data agrees with the time information recorded in program A, program A is marked in step S54. If, for instance, the meta data shown in FIG. 9 is analyzed, program A is marked so that mark t₂ is put at time t₂ (see FIG. 12B).

When meta data is generated and analyzed, it is possible to mark program A, which is unmarked, so as to indicate the time at which relay camera switching was performed. The editing personnel can accurately recognize the picture switching time by referencing such a mark.

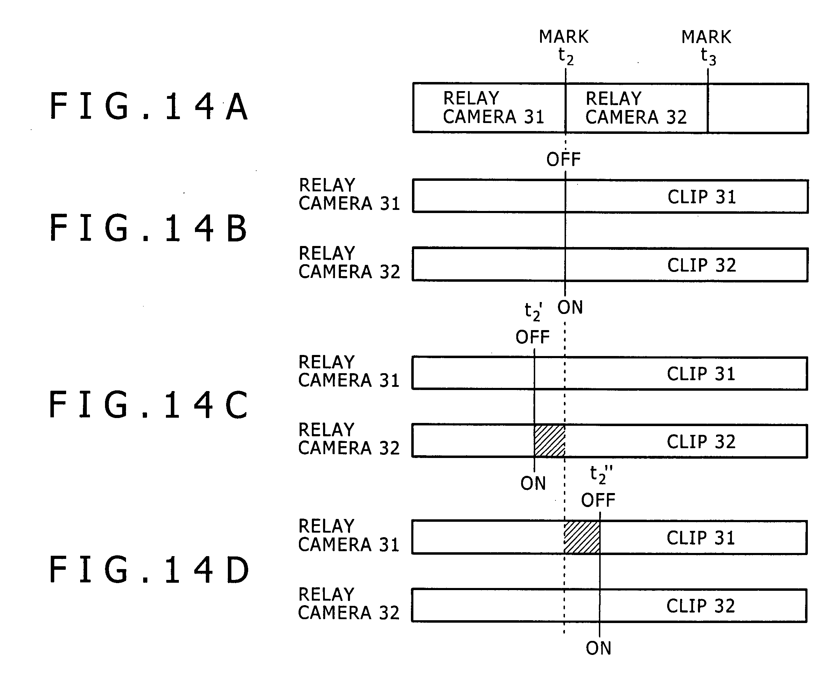

When pictures are marked, it is possible to jump from one mark to another (e.g., jump from mark t₂ to mark t₃). This makes it possible to perform editing quickly at a picture switching point (editing point). An editing operation performed at such an editing point will now be described with reference to FIGS. 14A through 14D.

### [Editing at editing points]

FIG. 14A represents program A, which is marked to indicate editing points. This marking operation is performed as a result of an editing operation that is performed in accordance with the meta data shown in FIG. 9 (meta data generated in a state shown in FIGS. 7A through 7E).

FIG. 14B indicates pictures shot by the relay camera 31 and relay camera 32 within program A, which is marked as indicated in FIG. 14A. The picture shot by the relay camera 31 is hereinafter referred to as a clip 31, whereas the picture shot by the relay camera 32 is hereinafter referred to as a clip 32.

At the time at which mark t₂ is put, the switching information about the relay camera 31 is "OFF" and the switching information about the relay camera 32 is "ON." It means that program A is created by using the clip 31 before mark t₂ and using the clip 32 between mark t₂ and mark t₃.

If, in a state described above, mark t₂ is to be moved to a mark t₂' point, which is earlier than mark t₂, as indicated in FIG. 14C, editing is performed so as to shorten the section for using the clip 31 and lengthen the section for using the clip 32. In FIG. 14C, the section for lengthening is hatched.

If, in a state shown in FIG. 14B, mark t₂ is to be moved to a mark t₂" point, which is later than mark t₂, as indicated in FIG. 14D, editing is performed so as to lengthen the section for using the clip 31 and shorten the section for using the clip 32. In FIG. 14D, the section for lengthening is hatched.

When the above process is performed, a conventionally employed method is to reproduce program A and search for a picture switching point while viewing the reproduced picture and referencing the time information noted down by a timekeeper. However, the present embodiment makes it possible to create meta data and use the created meta data to put marks on program A. Therefore, picture switching points can easily be determined by locating the marks. The process for locating the marks can be readily performed by the editing section 16. As a result, the user can easily locate picture switching points and perform detailed editing at the switching points.

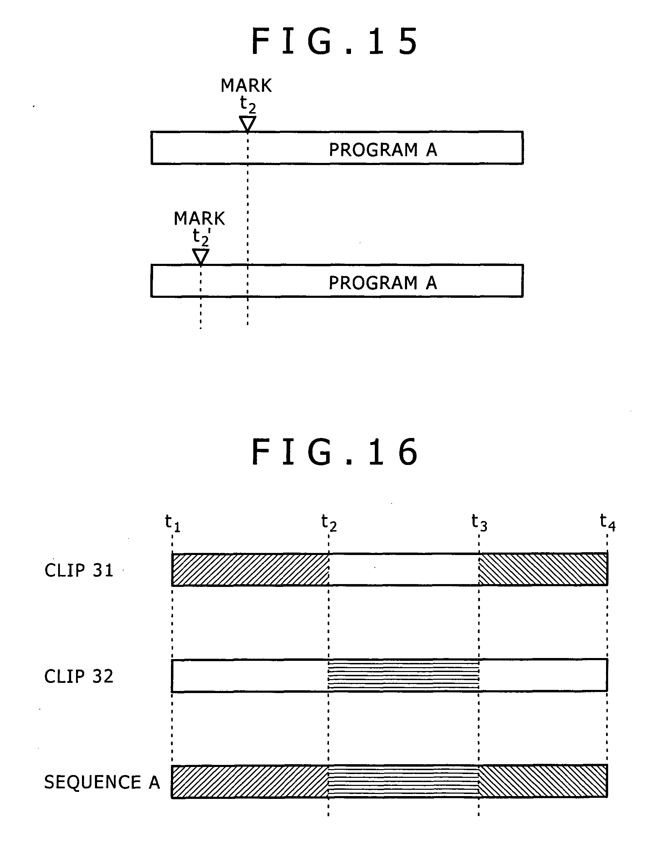

The description given above assumes that program A is marked. Therefore, mark t₂ for program A is replaced by mark t₂' for program A as indicated in FIG. 15. Mark t₂' for program A is on program A. Therefore, the picture preceding mark t₂' is a picture of the clip 31 and the picture succeeding mark t₂' is also a picture of the clip 31. Referring to FIG. 14C, the picture preceding mark t₂' may be the picture of the clip 31; however, the picture succeeding mark t₂' must be the picture of the clip 32.

Therefore, when program A is to be marked anew, or when, for instance, editing is to be performed as indicated in FIG. 14C, it is necessary to perform a process for deleting the picture within the hatched section from program A, extracting the picture within the hatched section from the clip 32, and pasting the extracted picture back to program A. Even in a situation where such a process is performed, it is easy to identify an editing point and perform editing because program A is marked.

The above embodiment has been described on the assumption that program A, which is obtained by combining pictures shot by a plurality of relay cameras, is to be edited. Editing can also be performed by combining pictures shot by a plurality of relay cameras. For example, it is possible to set tapes, which record pictures shot by the relay cameras 31 through 34, in the VTRs 151 to 154 (FIG. 5), reproduce the tapes, and edit the obtained pictures in accordance with the meta data.

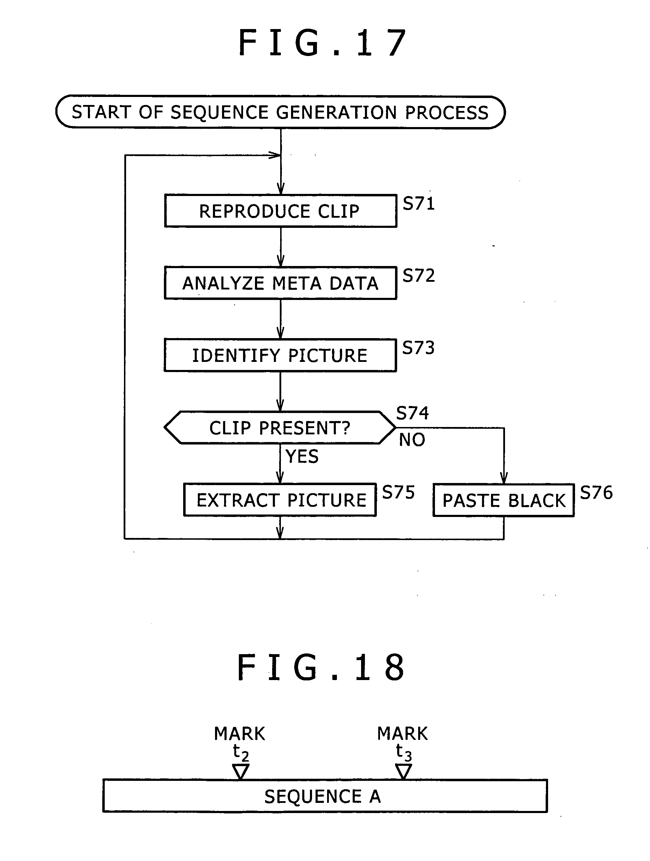

The above case will now be described in detail. First of all, a case where a picture is created by combining a plurality of pictures with meta data will be described with reference to FIGS. 16 and 17. More specifically, a case where timeline sequence A is created by editing the clips 31 and 32 will be described.

The clips 31 and 32 are pictures shot by the relay cameras 31 and 32, respectively. The picture created by means of editing is referred to as timeline sequence A so that it can be differentiated from program A. It is assumed for explanation purposes that the employed meta data is as indicated in FIG. 9 or 11.

In step S71 (FIG. 17), a clip reproduction operation starts. In this instance, the clips 31 and 32 are reproduced, for instance, by the VTRs 151 and 152 (FIG. 5). In step S72, the meta data is analyzed. So far, the processing steps are basically the same as processing steps S51 and S52, which are shown in FIG. 13.

Step S73 is then performed for picture identification. Step S74 is performed to judge whether an identified picture is reproduced as a clip. If, for instance, the meta data shown in FIG. 9 is analyzed, the picture between time t₁ and time t₂ is identified as a picture that is fed from the relay camera 31. It is therefore concluded that the clip 31 exists.

In the above case, the flow proceeds to step S75. In step S75, a picture is extracted from a clip. In the present example, the picture between time t₁ and time t₂ is extracted from the clip 31 and pasted onto the associated section as a picture constituting timeline sequence A.

If, on the other hand, the meta data shown in FIG. 11 is analyzed, it may be impossible to determine whether the picture between time t₂ and time t₃ is derived from the relay camera 31 or relay camera 32 because the relay cameras 31 and 32 are both in the "ON" state. In this instance, it is concluded that no clip exists.

In the above case, the flow proceeds to step S76. In step S76, a black is pasted onto the associated section. It means that the section onto which a black is pasted is a section onto which a special picture (a "wipe" picture in the case described above) is to be pasted.

When the above process is repeated, timeline sequence A is created.

As indicated in FIG. 18, mark t₂ and mark t₃ can be put on timeline sequence A, which is created as described above. It is preferred that the marks be put on timeline sequence A to permit other editing operations. A situation where mark t₂ is to be shifted for editing purposes will now be considered. For example, the operation for moving mark t₂ to a mark t₂' position, which is earlier than mark t₂, as indicated in FIG. 14C will be considered.

Within unedited timeline sequence A, a picture before the mark t₂ point is obtained by referencing the clip 31, whereas a picture after the mark t₂ point is obtained by referencing the clip 32. Even when mark t₂ is moved to the mark t₂' point in this state, a picture before the mark t₂' point is obtained by referencing the clip 31, whereas a picture after the mark t₂' point is obtained by referencing the clip 32.

As described above, timeline sequence A is composed by referencing the clips 31 and 32. Therefore, even if the mark position is shifted, there is no need to perform a process that is performed when a mark put on program A is shifted. As a result, this type of editing operation can be performed with ease.

As described above, the present invention makes it possible to generate meta data that includes the information about relay cameras used for shooting and the information about relay camera switching timing. With the generated meta data, it is possible to mark a picture, which includes pictures shot by a plurality of relay cameras, for the purpose of indicating the picture switching timing. Such marking can be completed with ease. For the user, such marking can be automatically done.

It is true that the user is provided with increased ease of operation when marking can be automatically done. However, even when the user is allowed to perform manual marking, it is at an advantage in that the marking position can easily be located.

Further, when marking is completed, it is easy to perform editing at picture switching points.

### Second Embodiment

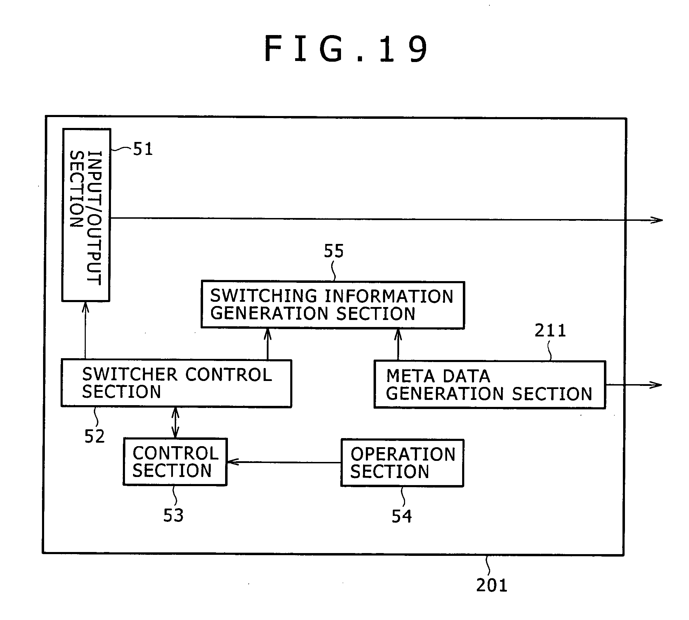

The first embodiment has been described on the assumption that the editing section 16 (FIG. 1) generates meta data. As a second embodiment, however, the meta data may be generated by the switcher 13. FIG. 19 shows a typical configuration of a switcher 201, which is used to generate the meta data (the reference numeral assigned to this switcher is rendered different from the reference numeral assigned to the switcher according to the first embodiment, which is shown in FIG. 2, in order to differentiate the former switcher from the latter).

The switcher 201, which is shown in FIG. 19, is obtained by adding a meta data generation section 211 to the switcher 13, which is shown in FIG. 2. The other parts of the switcher 201 are the same as those of the switcher 13. The time information generated by the time information generation section 15 is also supplied to the meta data generation section 211.

As is the case with the meta data generation section 131, which is shown in FIG. 5, meta data generation section 211 generates the meta data from switching information and time information. Meta data generation, meta data based editing, and other similar processes can be performed in the same manner as in the first embodiment. Such processes will not be described because they have already been described.

Since the meta data is generated by the switcher 201, the editing section 16 does not have to generate the meta data. Therefore, the editing section 16 for the second embodiment is obtained by removing the meta data generation section 131 from the editing section 16 shown in FIG. 5. The meta data generated by the switcher 201 is recorded, for instance, on a predetermined recording medium before being supplied to the editing section 16.

Even when the meta data is generated by the switcher 201 in accordance with the second embodiment, the same advantages are provided as in the first embodiment.

The above embodiments have been described on the assumption that VTRs are used. However, the present invention is also applicable to a case where an apparatus other than a VTR is used. For example, it is possible to employ an apparatus that uses an optical disk, hard disk drive, or semiconductor memory as a recording medium.

### [Recording medium]

A series of processes described above can be performed not only by hardware having proper functions but also by software. When the series of processes is to be performed by software, the software is installed from a recording medium onto a computer in which programs constituting the software are incorporated in dedicated hardware or onto a general-purpose or other personal computer in which various functions can be exercised by installing various programs.

As indicated in FIG. 4, the recording medium may be not only a magnetic disk 111 (including a flexible disk), optical disk 112 (including a CD-ROM (Compact Disc-Read Only Memory) and DVD (Digital Versatile Disc), magneto-optical disk 113 (including an MD (Mini-Disc) (registered trademark)), semiconductor memory 114, or other package medium that records a program and is distributed separately from a personal computer or the like to supply the program to the user, but also a hard disk or like device that is supplied to the user after being built in a computer and includes a ROM 92 or storage section 98, which stores a program.

The steps for writing a program that is supplied by a medium include not only processing steps that are chronologically performed in a written order but also nonchronological processing steps that are performed simultaneously or individually.

The term "system" denotes the entire apparatus that includes a plurality of devices.

The present invention contains subject matter related to Japanese Patent Application No. 2004-115603 filed in the Japanese Patent Office on April 9, 2004, the entire contents of which being incorporated herein by reference.

It should be understood by those skilled in the art that various modifications, combinations, subcombinations, and alterations may occur depending on design requirements and other factors insofar as they are within the scope of the appended claims or the equivalents thereof.

## Claims

1. An editing apparatus comprising:
acquisition means for acquiring identification information for identifying a camera that has shot a picture selected out of pictures shot by a plurality of cameras;
generation means for generating meta data, which indicates the switching timing for switching among a plurality of pictures shot by said plurality of cameras, in accordance with said identification information acquired by said acquisition means; and
editing means for editing pictures, which have been shot by said plurality of cameras, by using said meta data generated by said generation means.

2. The editing apparatus according to claim 1, wherein said editing means ensures that said meta data is reflected automatically or manually.

3. The editing apparatus according to claim 1, wherein said editing means reflects said meta data in a program created by entering a plurality of pictures, which have been shot by said plurality of cameras, with said switching timing, and handles said switching timing as an editing point of said program.

4. The editing apparatus according to claim 3, wherein said editing means records said editing point in said program as a marker.

5. The editing apparatus according to claim 3, wherein said editing means creates a timeline sequence from said program and handles an editing point of said program as a cut editing point within said timeline sequence.

6. The editing apparatus according to claim 1, wherein said editing means creates a timeline sequence from a plurality of pictures shot by said plurality of cameras and performs editing by rearranging a plurality of pictures shot by said plurality of cameras within said timeline sequence.

7. An editing method for use in an editing apparatus, which edits a plurality of pictures, the editing method comprising:
an acquisition step of acquiring identification information for identifying a camera that has shot a picture selected out of pictures shot by a plurality of cameras;
a generation step of generating meta data, which indicates the switching timing for switching among a plurality of pictures shot by said plurality of cameras, in accordance with said identification information acquired in said acquisition step; and
an editing step of editing pictures, which have been shot by said plurality of cameras, by using said meta data generated in said generation step.

8. A program for causing an editing apparatus, which edits a plurality of pictures, to perform a process including:
an acquisition step of acquiring identification information for identifying a camera that has shot a picture selected out of pictures shot by a plurality of cameras;
a generation step of generating meta data, which indicates the switching timing for switching among a plurality of pictures shot by said plurality of cameras, in accordance with said identification information acquired in said acquisition step; and
an editing step of editing pictures, which have been shot by said plurality of cameras, by using said meta data generated in said generation step.

9. A recording medium storing a computer-readable program for editing a plurality of pictures and performing a process including:
an acquisition step of acquiring identification information for identifying a camera that has shot a picture selected out of pictures shot by a plurality of cameras;
a generation step of generating meta data, which indicates the switching timing for switching among a plurality of pictures shot by said plurality of cameras, in accordance with said identification information acquired in said acquisition step; and
an editing step of editing pictures, which have been shot by said plurality of cameras, by using said meta data generated in said generation step.

10. An editing apparatus comprising:
acquisition means for acquiring meta data, which indicates the switching timing for switching among a plurality of pictures shot by a plurality of cameras, in accordance with identification information for identifying a camera that has shot a picture selected out of pictures shot by said plurality of cameras; and
editing means for editing pictures, which have been shot by said plurality of cameras, by using said meta data.
